(19) Europäisches Patentamt
European Patent Office
Office européen des brevets

(11) Veröffentlichungsnummer: **0 272 563 B1**

(12) **EUROPÄISCHE PATENTSCHRIFT**

(45) Veröffentlichungstag der Patentschrift: **24.07.91**

(51) Int. Cl.$^5$: **C08G 18/00**, C08G 18/18

(21) Anmeldenummer: **87118423.0**

(22) Anmeldetag: **12.12.87**

# (54) Verfahren zur zweistufigen Herstellung von Formkörpern.

(30) Priorität: **24.12.86 DE 3644382**

(43) Veröffentlichungstag der Anmeldung:
**29.06.88 Patentblatt 88/26**

(45) Bekanntmachung des Hinweises auf die Patenterteilung:
**24.07.91 Patentblatt 91/30**

(84) Benannte Vertragsstaaten:
**AT BE CH DE FR GB IT LI NL SE**

(56) Entgegenhaltungen:
**EP-A- 0 129 799**
**EP-A- 0 130 454**
**DE-A- 2 655 367**
**DE-A- 3 600 764**

(73) Patentinhaber: **BAYER AG**

**W-5090 Leverkusen 1 Bayerwerk(DE)**

(72) Erfinder: **Müller, Hanns Peter, Dr.**
**Weizenfeld 36**
**W-5060 Bergisch Gladbach 2(DE)**
Erfinder: **Uerdingen, Walter, Dr.**
**Humperdinck-Strasse 41**
**W-5090 Leverkusen 1(DE)**
Erfinder: **Heine, Heinrich**
**Müritzstrasse 38**
**W-5090 Leverkusen 1(DE)**

EP 0 272 563 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Zweistufenverfahren zur Herstellung von Formkörpern durch Umsetzung von Reaktionsgemischen aus organischen Polyisocyanaten, organischen Polyepoxiden und speziellen Katalysatoren, sowie gegebenenfalls weiteren Hilfs- und Zusatzmitteln.

Reaktionsharzgemische aus organischen Polyisocyanaten, organischen Polyepoxiden und speziellen Katalysatoren ergeben Kunststoffe mit Isocyanurat- und Oxazolidinonstrukturen. Sie werden hergestellt durch Polyaddition von polyfunktionellen 1,2-Epoxiden mit Polyisocyanaten unter Verwendung von Härtungskatalysatoren (vgl. z.B. EP-A-0130 454, DE-OS 3 323 084 oder DE-OS 3 323 153).

Gemäß der deutschen Offenlegungsschrift DE-OS 36 00 764 gelingt die zweistufige Herstellung von Formkörpern aus Basis von organischen Polyisocyanaten und organischen Polyepoxiden unter Verwendung von tertiären oder quartären Ammoniumsalzen von alkylierend wirkenden oder sauren Estern von organischen Phosphonsäuren oder der Phosphorsäure als Katalysatoren, wobei der intermediäre "B-Zustand" durch Abkühlen des Reaktionsgemischs und damit weitgehendem Abbruch der Reaktion erreicht wird. Die Systeme der älteren Anmeldung können dann zu einem späteren Zeitpunkt durch erneutes Erhitzen in der vernetzten, nicht mehr schmelzbaren Zustand überführt werden.

Es war die der Erfindung zugrundeliegende Aufgabe, ein weiteres Verfahren zur zweistufigen Herstellung von Formkörpern aus den genannten Ausgangsmaterialien zur Verfügung zu stellen, welches insbesondere folgende Vorteile aufweist:

1. Die erste Stufe ("B-Zustand") sollte ohne jede Inkubationszeit reproduzierbar erreichbar sein.
2. Der "B-Zustand" sollte bei Raumtemperatur für einen beliebig langen Zeitraum stabil sein, d.h. der zur Erreichung des "B-Zustands" eingesetzte Katalysator sollte nach seiner Neutralisation durch Zugabe eines Katalysatorengifts seine Wirksamkeit völlig verlieren.
3. Das Verfahren sollte auf einfache Weise durchführbar sein und zu Formkörpern führen, die bezüglich ihrer mechanischen Eigenschaften dem hohen Werteniveau der bislang einstufig hergestellten Formkörper entsprechen.

Diese Aufgabe konnte mit der Bereitstellung des nachstehend näher beschriebenen erfindungsgemäßen Verfahrens gelöst werden.

Gegenstand der Erfindung ist ein Verfahren zur zweistufigen Herstellung von Formkörpern durch Umsetzung von

a) mindestens einem organischen Polyisocyanat mit

b) mindestens einer, mindestens zwei Epoxidgruppen aufweisenden organischen Verbindung in einer solchen Menge, die einem Äquivalentverhältnis von Isocyanatgruppen zu Epoxidgruppen von 1,2:1 bis 500:1 entspricht,

dadurch gekennzeichnet, daß man das die Komponenten a) und b) enthaltende Gemisch in Gegenwart

c) eines tertiären Amins als Katalysator zu einem Oxazolidinon- und Isocyanuratgruppen aufweisenden Zwischenprodukt umsetzt und die Reaktion bei einer Umsetzung von maximal 65 % der im Ausgangsgemisch vorliegenden Isocyanatgruppen durch Zugabe einer der Aminmenge mindestens äquivalenten Menge

d) eines alkylierend wirkenden Sulfonsäurealkylesters von Methyljodid oder von Dimethylsulfat abbricht, das so erhaltene, noch flüssige oder schmelzbare Zwischenprodukt, gegebenenfalls nach Pulverisierung, Aufschmelzen oder Auflösen in einem geeigneten Lösungsmittel,

e) mit mindestens einem latenten, durch Wärme aktivierbaren Katalysator versetzt und in einer zweiten Stufe unter Formgebung und weiterer Wärmeeinwirkung in den endgültigen, vernetzten Zustand überführt.

Bei der Ausgangskomponente a) handelt es sich um beliebige organische Polyisocyanate der aus der Polyurethanchemie an sich bekannten Art. Geeignet sind beispielsweise aliphatische, cycloaliphatische,araliphatische, aromatische und hetrocyclische Polyisocyanate, wie sie z.B. von W. Siefken in Justus Liebigs Annalen der Chemie, 562, Seiten 75 bis 136, beschrieben werden, beispielsweise solche der Formel

$$Q\,(NCO)_n,$$

in der

$n$ = 2-4, vorzugsweise 2,

und

Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,

oder einen araliphatischen Kohlenwasserstoffrest mit 8-15, vorzugsweise 8-13 C-Atomen, bedeuten, z.B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3-und -1,4-diisocyanat sowie beliebige Gemische dieser Isomeren, 1-Isocyanato-3,3,5-trimethyl-5-isocyanatomethylcyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3-und/oder -1,4-phenylendiisocyanat, Perhydro-2,4'- und/oder -4,4'-diphenylmethan-diisocyanat, 1,3- und 1,4-Phenylendiisocyanat,2,4- und 2,6-Toluylendiisocyanat sowie beliebige Gemische dieser Isomeren, Diphenylmethan-2,4'-und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten werden (GB 874 430 und GB 848 671), m- und p-Isocyanatophenylsulfonyl-isocyanate (US 3 454 606), perchlorierte Arylpolyisocyanate, (US 3 277 138), Carbodiimidgruppen aufweisende Polyisocyanate (US 3 152 162), Norbornan-Diisocyanate (US 3 492 330), Allophanatgruppen aufweisende Polyisocyanate, (GB 994 890), Isocyanuratgruppen aufweisende Polyisocyanate, (US 3 001 973), Urethangruppen aufweisende Polyisocyanate, (US 3 394 164 und 3 644 457), acylierte Harnstoffgruppen aufweisende Polyisocyanate (DE-PS 1 230 778), Biuretgruppen aufweisende Polyisocyanate, (US 3 124 605, 3 201 372 und 3 124 605), durch Telomerisationsreaktionen hergestellte Polyisocyanate (US 3 654 106), Estergruppen aufweisende Polyisocyanate, (US 3 567 763), Umsetzungsprodukte der obengenannten Isocyanate mit Acetalen (DE-PS 1 072 385) und polymere Fettsäureester enthaltende Polyisocyanate (US 3 455 883).

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), insbesondere Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanat, die sich vom 2,4- und/oder 2,6-Toluylendiisocyanat bzw. vom 4,4'-und/oder 2,4'-Diphenyl-methandiisocyanat ableiten.

Besonders bevorzugt ist die Verwendung eines Isomeren-und/oder Homologengemisches von Polyisocyanaten der Diphenylmethan-Reihe mit einem Gehalt an 2,4'-Diisocyanatodiphenylmethan von mehr als 20 Gew.-%.

Es handelt sich hierbei um Polyisocyanatgemische der Diphenylmethanreihe mit einem Gehalt an 2,4'-Diisocyanatodiphenylmethan von mehr als 20 Gew.-% vorzugsweise von 30 bis 70 Gew.-%. Neben diesen 2,4'-Isomeren enthält die besonders bevorzugte Polyisocyanat-Komponente im allgemeinen weitere isomere bzw. homologe Polyisocyanate der Diphenylmethanreihe. Dies bedeutet, daß es sich bei der besonders bevorzugten Polyisocyanat-Komponente im allgemeinen entweder um Gemische aus 2,4'-Diisocyanatodiphenylmethan mit 4,4'-Diisocyanatodiphenylmethan und gegebenenfalls 0 bis 20 Gew.-%, bezogen auf das Gesamtgemisch an 2,2'-Diisocyanat-diphenylmethan, oder aber um Gemische dieser Isomeren mit höherkernigen Polyphenyl-polymethylen-polyisocyanaten handelt. In den letztgenannten Gemischen liegt im allgemeinen ein Gehalt von 10 bis zu 60 Gew.-% bezogen auf Gesamtgemisch an derartigen höherkernigen Polyisocyanaten vor. Das erstgenannte als bevorzugt einzusetzende Polyisocyanat-Komponente geeignete an 2,4'-Isomeren angereicherte Diisocyanatgemisch kann beispielsweise durch Abdestillieren eines Diisocyanatgemischs der angegebenen Zusammensetzung aus einem Polyisocyanat-Gemisch erhalten werden, wie es durch Phosgenierung von Anilin/Formaldehyd-Kondensaten entsteht. Das ebenfalls besonders bevorzugt geeignete, höherkernige Polyisocyanate enthaltende Gemisch kann beispielsweise durch Rückvermischen des zuletzt genannten Destillationsproduktes mit an 4,4'-Diisocyanatodiphenylmethan verarmten Phosgenierungsprodukt beispielsweise gemäß DE-AS 1 923 214 erhalten werden. Es ist auch möglich, ein derartiges Gemisch, d.h. ein Polyisocyanatgemisch, dessen Gehalt an 2,4'-Diisocyanatodiphenylmethan den gemachten Angaben entspricht, direkt durch entsprechende Steuerung der Anilin/Formaldehyd-Kondensation zu erhalten. Die US-PS 3 277 173 beschreibt beispielsweise einen Weg zu Polyamingemischen der Diphenylmethanreihe mit einem hohen Gehalt an 2,4'-Diaminodiphenylmethan. Durch Phosgenierung dieser an 2,4'-Diaminodiphenylmethan reichen Kondensate können dann direkt die besonders bevorzugt einsetzbaren Polyisocyanate erhalten werden. Auch in der DT-OS 1 937 685 sowie in der US-PS 3 362 979 werden Wege zu derartigen Polyisocyanatgemischen gewiesen. Auch in den besonders bevorzugt geeigneten

Polyisocyanatgemischen, welche höherkernige Polyisocyanate der Diphenylmethanreihe enthalten, liegt der Gehalt an 2,4'-Diisocyanatodiphenylmethan oberhalb 20 Gew.-% bezogen auf Gesamtgemisch.

Bei der Komponente b) handelt es sich um beliebige, mindestens zwei Epoxidgruppen, d.h. 1,2-Epoxidgruppen aufweisende aliphatische, cycloaliphatische, aromatische oder heterocyclische Verbindungen. Die bevorzugten als Komponente b) geeigneten Polyepoxide weisen pro Molekül 2 bis 4, vorzugsweise 2 Epoxidgruppen und ein Epoxidäquivalentgewicht von 90 bis 500, vorzugsweise 170 bis 220 auf.

Geeignete Polyepoxide sind beispielsweise Polyglycidylether mehrwertiger Phenole, beispielsweise von Brenzkatechin, Resorcin, Hydrochinon, 4,4'-Dihydroxydiphenylmethan, von 4,4'-Dihydroxy-3,3'-dimethyldiphenylmethan, von 4,4'-Dihydroxydiphenylmethan, 4,4'-Dihydroxydiphenylcyclohexan, von 4,4'-Dihydroxy-3,3'-dimethyldiphenylpropan, von 4,4'-Dihydroxydiphenyl, aus 4,4'-Dihydroxydiphenylsulfon, von Tris-(4-hydroxyphenyl)-methan, den Chlorierungs- und Bromierungsprodukten der vorstehend genannten Diphenole, von Novolacken (d.h. aus Umsetzungsprodukten von ein- oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Oxycarbonsäure mit einem Mol eines Dihalogenalkans oder Dihalogendialkylesters erhalten wurden (vgl. britisches Patent 1 017 612) oder von Polyphenolen, die durch Kondensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z.B. N-Di-(2,3-epoxypropyl)-anilin, N,N'-Dimethyl-N,N'-diepoxypropyl-4,4'-diaminodiphenylmethan, N-Diepoxypropyl-4-amino-phenylglycidether (vgl. GB-PS 772 830 und 816 923).

Außerdem kommen in Frage: Glycidylester mehrwertiger aromatischer, aliphatischer und cycloaliphatischer Carbonsäuren, beispielsweise Phthalsäurediglycidylester, Adipinsäurediglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxygruppen oder Hexahydrophthalsäurediglycidylester, die gegebenenfalls mit Methylgruppen substituiert sein können.

Glycidylether mehrwertiger Alkohole, beispielsweise von 1,4-Butandiol, 1,4-Butendiol, Glycerin, Trimethylolpropan, Pentaerythrit und Polyethylenglykolen können ebenfalls verwendet werden. Von weiterem Interesse sind Triglycidylisocyanurat, N,N'-Diepoxypropyloxamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich seien Epoxidierungsprodukte von mehrfach ungesättigten Verbindungen genannt, wie vegetabilischen Ölen und deren Umwandlungsprodukten, Epoxidierungsprodukte von Di- und Polyolefinen, wie Butadien, Vinylcyclohexen, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten. Außerdem seien Polymerisate von ungesättigten Monoepoxiden genannt, beispielsweise aus Methacrylsäureglycidylester oder Allylglycidylether.

Vorzugsweise werden erfindungsgemäß folgende Polyepoxidverbindungen oder deren Mischungen als Komponente b) verwendet:

Polyglycidylether mehrwertiger Phenole, insbesondere von Bisphenol A; Polyepoxidverbindungen auf der Basis von aromatischen Aminen, insbesondere Bis (N-epoxypropyl)-anilin, N,N'-Dimethyl-N,N'-diepoxypropyl-4,4'-diaminodiphenylmethan und N-Diepoxypropyl-4-amino-phenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2-6), insbesondere 3 Mol Hexahydrophthalsäureanhydrid und einem Mol 1,1,1-Trimethylolpropan, 3,4-Epoxycyclohexylmethan-3,4-epoxycyclohexancarboxylat.

Flüssige Polyepoxide oder niedrigviskose Diepoxide, wie Bis-(N-epoxipropyl)-anilin oder Vinylcyclohexandiepoxid können in besonderen Fällen die Viskosität von bereits flüssigen Polyepoxiden weiter herabsetzen oder feste Polyepoxide in flüssige Mischungen überführen.

Die Komponente b) wird in einer solchen Menge eingesetzt, die einem Äquivalentverhältnis von Isocyanatgruppen zu Epoxidgruppen von 1,2:1 bis 500:1, vorzugsweise 3:1 bis 65:1 und insbesondere 5:1 bis 30:1, entspricht.

Bei der Katalysatorkomponente c) handelt es sich um beliebige mono- oder polyfunktionelle organische Amine mit tertären Aminogruppen. Geeignete Amine der genannten Art weisen im allgemeinen ein Molekulargewicht von bis zu 353, vorzugsweise von 101 bis 185 auf. Bevorzugt sind solche tertiäre Amine,

die bei der Reaktionstemperatur der ersten Reaktionsstufe flüssig sind. Typische Beispiele geeigneter bzw. bevorzugt geeigneter Amine sind Triethylamin, Tri-n-butylamin, N,N,N',N'-Tetramethylethylendiamin, N,N-Dimethyl-benzylamin, Triethylendiamin oder Dimethyloctylamin, N-Methylmorpholin und Bis-(N,N-dimethyl-aminoethyl)-ether.

Die Katalysatoren c) werden in einer Menge von 0,01 bis 2, vorzugsweise 0,01 bis 0,1 Gew.-%, bezogen auf das Gesamtgewicht der Komponenten a) und b), eingesetzt.

Bei den Stoppern d) handelt es sich um Katalysatorengifte für die Katalysatoren c). Geeignet sind beliebige, alkylierend wirkende Ester von organischen Sulfonsäuren. Vorzugsweise weisen diese Sulfonsäurealkylester ein Molekulargewicht von 110 bis 250 auf. Geeignet sind sowohl aliphatische Sulfonsäurealkylester wie n-Butansulfonsäuremethylester, n-Perfluorbutansulfonsäuremethylester oder n-Hexansulfonsäureethylester als auch aromatische Sulfonsäurealkylester wie Benzolsulfonsäuremethylester, -ethylester oder -n-butylester, p-Toluolsulfonsäuremethylester, -ethylester oder -n-butylester, 1-Naphthalinsulfonsäuremethylester, 3-Nitrobenzolsulfonsäure-methylester oder 2-Naphthalinsulfonsäuremethylester. Die genannten aromatischen Sulfonsäureester sind bevorzugt. Besonders bevorzugt wird p-Toluolsulfonsäure methylester als Komponente d) verwendet. Ebenfalls geeignet jedoch weniger bevorzugt sind Methyljodid und Dimethylsulfat als Komponente d).

Die Komponente d) wird mindestens in einer solchen Menge verwendet, die den tert. Aminstickstoffatomen der Komponente c) äquivalent ist.

Als latente Katalysatoren e) können beispielsweise e1) tertiäre oder quartäre Ammoniumsalze aus (i) organischen Aminen und (ii) alkylierend wirkenden oder sauren Estern von organischen Phosphonsäuren oder der Phosphorsäure oder e2) Additionskomplexe von Bortrihalogeniden mit tert. Aminen verwendet werden.

Bei dem Bestandteil (i) der latenten Katalysatoren e1) handelt es sich um beliebige mono- oder polyfunktionelle organische Amine mit sekundären und/oder tertiären Aminogruppen. Bei der Herstellung der Katalysatoren können sekundäre Aminogruppen durch Alkylierung in tert. Ammoniumgruppen, tert. Aminogruppen durch Neutralisation in tert. Ammoniumgruppen oder durch Quaternierung in quartäre Ammoniumgruppen überführt werden. Geeignete Amine der genannten Art weisen im allgemeinen ein Molekulargewicht von 45 bis 353, vorzugsweise von 45 bis 185 auf. Typische Beispiele geeigneter Amine sind Dimethylamin, Trimethylamin, Diethylamin, Triethylamin, Di-n-butylamin, Tri-n-butylamin, N,N'-Dimethylethylethylendiamin, N,N,N',N'-Tetramethyl-ethylendiamin, N,N-Dimethylbenzylamin, Triethylendiamin, Dimethyloctylamin, Diazabicyclooctan, Methyltrioctylamin, N-Methylmorpholin und Bis-(N,N-dimethyl-aminoethyl)-ether.

Bei dem Bestandteil (ii) handelt es sich um alkylierend wirkende oder saure Ester von organischen Phosphonsäuren oder der Phosphorsäure, Vorzugsweise werden als Phosphonsäureester neutrale, alkylierend wirkende Ester von organischen Phosphonsäuren verwendet. Diese Verbindungen weisen im allgemeinen ein Molekulargewicht von 124 bis 214 auf. Gut geeignet sind beispielsweise Methanphosphonsäuredimethylester, Methanphosphonsäurediethylester, Benzolphosphonsäuredimethylester, Benzolphosphonsäurediethylester oder Ethanphosphonsäurediethylester. Als Ester der Phosphorsäure können sowohl einbasische saure Ester als auch neutrale Ester verwendet werden. Diese Verbindungen weisen im allgemeinen ein Molekulargewicht von 126 bis 266 auf. Geeignet sind beispielsweise Dimethylphosphat, Diethylphosphat, Di-n-butylphosphat, Triethylphosphat oder Tri-n-butylphosphat. Bevorzugte Bestandteile (ii) der erfindungswesentlichen Katalysatoren c) sind Methanphosphonsäuredimethylester und Di-n-butylphosphat.

Die Herstellung der Katalysatoren e1) erfolgt nach bekannten Verfahren (z.B. Houben-Weyl, Bd. XII/2, S. 262 ff) durch Umsetzung der beispielhaft genannten Komponenten (i) und (ii) in vorzugsweise äquivalenten Mengen mit oder ohne Lösungsmittel bei Temperaturen von 20 bis 200 °C. Dabei kann vorteilhaft sein, unter Inertgas und/oder Druck zu arbeiten. Es ist auch möglich, beispielsweise einen Überschuß der Komponenten (i) oder (ii) einzusetzen, und anschließend gegebenenfalls den nicht umgesetzten Überschuß beispielsweise destillativ zu entfernern.

Besonders bevorzugte Beispiele erfindungsgemäß verwendbarer Katalysatoren e1) sind:

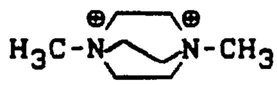 , 2 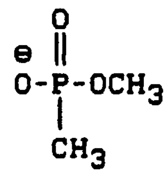

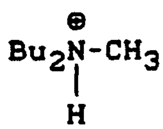 , 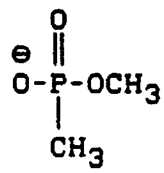

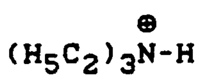 , 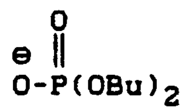

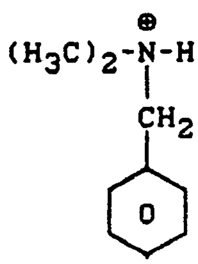 , 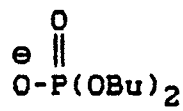

Geeignete latente Katalysatoren e2) sind beispielsweise die bekannten Additionskomplexe von Bortrihalogeniden, insbesondere Bortrichloriden oder Bortrifluoriden mit tert. Aminen, beispielsweise die in DE-PS 2 655 367 beschriebenen Additionskomplexe von Bortrichlorid und tert. Aminen der allgemeinen Formel

$BCl_3 . NR_1R_2R_3$

in der $R_1$, $R_2$ und $R_3$ gleich oder verschiedene aliphatische, aromatische, heterocyclische oder arylaliphatische Reste sind, die paarweise auch Bestandteil von heterocyclischen Ringen sein können. Geeignet sind auch die analogen Komplexe des Bortrifluorids der Formel

$BF_3 . NR_1R_2R_3$ ,

wobei $R_1$, $R_2$ und $R_3$ die vorstehend angegebene Bedeutung haben.

Gut geeignet sind beispielsweise die entsprechenden Bortrichlorid- bzw. Bortrifluorid-Komplexe von tert. Aminen der vorstehend bei der Beschreibung der Komponenten c) und e1) beispielhaft genannten Art oder auch von heterocyclischen tert. Aminen wie 1,2-Dimethylimidazol oder 1-Benzyl-2-phenylimidazol. Die Aminkomponente der Komplexe weist im allgemeinen ein Molekulargewicht innerhalb der oben in Zusammenhang mit der Komponente c) genannten Bereiche auf.

Die latenten Katalysatoren e) werden im allgemeinen in einer Menge 0,01 bis 20, vorzugsweise 0,1 bis 10 und besonders bevorzugt von 0,5 bis 2 Gew.-Teilen, bezogen auf 100 Gew.-Teile der im "B-Zustand" befindlichen Zwischenstufe, d.h. des nach Abstoppen des Katalysators c) vorliegenden Harzes, eingesetzt.

Ebenso wie im Falle der Katalysatoren c) können auch als Katalysatoren e) beliebige Gemische der beispielhaft genannten Verbindungen eingesetzt werden. Durch die Art und Konzentration der Katalysatoren c) und e) kann die Reaktionszeit und auch die Reaktionstemperatur sowohl bei der Herstellung der Zwischenstufe ("B-Zustand") als auch bei der Aushärtung des in der Zwischenstufe vorliegenden Harzes den jeweiligen Bedürfnissen angepaßt werden.

Bei den gegebenenfalls mitzuverwendenden Hilfs- und Zusatzmitteln f) handelt es sich beispielsweise

f1) um polymerisierbare, olefinisch ungesättigte Monomere, die in Mengen von bis zu 100 Gew.-%, vorzugsweise bis zu 50 Gew.-%, bezogen auf das Gesamtgewicht der Komponenten a) und b) zum Einsatz gelangen können.

Typische Beispiele von Zusatzmitteln f1) sind olefinisch ungesättigte Monomere, die keine gegenüber

NCO-Gruppen reaktive Wasserstoffatome aufweisen, wie z.B. Diisobutylen, Styrol, $C_1$-$C_4$-Alkylstyrole, wie $\alpha$-Methylstyrol, $\alpha$-Butylstyrol, Vinylchlorid, Vinylacetat, Maleinimidderivate wie z.B. Bis-(4-maleinimido-phenyl)-methan, Acrylsäure-$C_1$-$C_8$-alkylester wie Acrylsäuremethylester, Acrylsäurebutylester oder Acrylsäureoctylester, die entsprechenden Methacrylsäureester, Acrylnitril oder Diallylphthalat. Beliebige Gemische derartiger olefinisch ungesättigter Monomerer können ebenfalls eingesetzt werden. Vorzugsweise werden Styrol und/oder (Meth)-acrylsäure-$C_1$-$C_4$-alkylester verwendet, vorausgesetzt, die Zusatzmittel f1) werden überhaupt eingesetzt.

Bei Mitverwendung von Zusatzmitteln f1) ist die Mitverwendung von klassischen Polymerisationsinitiatoren wie z.B. Benzoylperoxid möglich, im allgemeinen jedoch nicht erforderlich.

Weitere, gegebenenfalls mitzuverwendende Hilfs- und Zusatzmittel f) sind

f2) mindestens 2, insbesondere 2 bis 8 und vorzugsweise 2 bis 3 alkoholische Hydroxylgruppen aufweisende organische Verbindungen des Molekulargewichtsbereichs 62 bis 2000, wie sie als Aufbaukomponente für Polyurethane an sich bekannt sind. Beispiele sind einfache mehrwertige Alkohole wie Ethylenglykol, Hexandiol-1,6, Glycerin oder Trimethylolpropan, Dimethylsiloxan-Einheiten aufweisende Polyole, z.B. Bis-(dimethyl-hydroxymethyl-silyl)-ether; Estergruppen aufweisendde Polyhydroxylverbindungen wie z.B. Ricinusöl oder Polyhydroxypolyester wie sie durch Polykondensation überschüssiger Mengen einfacher mehrwertiger Alkohole der soeben beispielhaft genannten Art mit vorzugsweise dibasischen Carbonsäuren bzw. deren Anhydride wie z.B. Adipinsäure, Phthalsäure oder Phthalsäureanhydrid zugänglich sind oder Polyhydroxypolyether wie sie durch Anlagerung von Alkylenoxiden wie Propylenoxid und/oder Ethylenoxid an geeignete Startermoleküle wie z.B. Wasser, die soeben genannten einfachen Alkohole oder auch Amine mit mindestens zwei aminischen NH-Bindungen zugänglich sind.

Die Zusatzmittel f2) werden, falls überhaupt, in einer solchen maximalen Menge mitverwendet, die einem NCO/OH-Äquivalentverhältnis, bezogen auf die Isocyanatgruppen der Komponente a) und die Hydroxylgruppen der Komponente f2), von mindestens 2:1, vorzugsweise mindestens 2,5:1, entspricht. In jedem Fall muß die Menge der Komponente a) so bemessen sein, daß das Äquivalentverhältnis von Isocyanatgruppen der Komponente a) zur Summe der Epoxidgruppen der Komponente b) Hydroxylgruppen der Komponente f2) und den gegebenenfalls in der Komponente b) vorliegenden Hydroxylgruppen mindestens bei 1,2:1, besonders bevorzugt bei 4:1 bis 30:1 liegt.

Die Mitverwendung von Hilfs- und Zusatzmitteln f1) bzw. f2) ist im allgemeinen nicht erforderlich. Die unter f1) beispielhaft genannten Zusatzmittel sind im übrigen gegenüber den unter f2) beispielhaft genannten Verbindungen bevorzugt. Grundsätzlich ist es auch möglich, gleichzeitig beide Arten von Hilfs- und Zusatzmitteln mitzuverwenden.

Weitere, gegebenenfalls mitzuverwendende Hilfs- und Zusatzmitteln f) sind beispielsweise Füllstoffe wie z.B. Quarzmehl, Kreide oder Aluminiumoxid; Pigmente wie z.B. Titandioxid, Eisenoxid oder organische Pigmente wie Phthalocyanin-Pigmente; Weichmacher wie z.B. Dioctylphthalat, Tributyl- oder Triphenylphosphat; lösliche Farbstoffe oder Verstärkungsmaterialien wie z.B. Glasfasern oder Glasgewebe. Ebenfalls geeignet sind C-Fasern bzw. C-Fasergewebe und andere organische Polymerfasern wie z.B. Aramidfasern oder LC-Polymerfasern (LC = "liquid cristal").

Die Hilfs- und Zusatzmittel können sowohl den Ausgangsmaterialien a) und b) vor der Durchführung des erfindungsgemäßen Verfahrens einverleibt oder auch erst später mit dem in der Zwischenstufe vorliegenden Harz, gegebenenfalls nach dessen Pulverisierung, Aufschmelzen oder Auflösen in einem geeigneten Lösungsmittel, zugemischt werden.

Zur Durchführung des erfindungsgemäßen Verfahrens werden die Ausgangsmaterialien a) bis c) und gegebenenfalls die Hilfs- und Zusatzmittel f) bzw. ein Teil hiervon miteinander vermischt und innerhalb des Temperaturbereichs von 20 bis 150 °C, vorzugsweise 60 bis 130 °C, zur Reaktion gebracht. Nach einem Umsatz von maximal 65 %, vorzugsweise von 30 bis 60 % der in das Ausgangsgemisch über die Komponente a) eingebrachten Isocyanatgruppen wird die Reaktion durch Zugabe des Stoppers d) abgebrochen.

Das hierbei anfallende, im "B-Zustand" vorliegende Zwischenprodukt stellt im allgemeinen bei Raumtemperatur eine Flüssigkeit oder einen bei Temperaturen von maximal 120 °C schmelzbaren Feststoff dar und kann, gegebenenfalls nach beliebig langer Zwischenlagerung der zweiten Stufe des erfindungsgemäßen Verfahrens zugeführt werden.

Hierzu werden dem Zwischenprodukt gegebenenfalls nach Pulverisierung, Aufschmelzen oder Auflösen in einem geeigneten Lösungsmittel der latente Katalysator e) und gegebenenfalls (weitere) Hilfs- und Zusatzmittel zugesetzt. Falls die im "B-Zustand" vorliegenden Harze aus Lösung verarbeitet werden sollen, kommen als Lösungsmittel nicht nur inerte Lösungsmittel wie z.B. Aceton, Butylacetat, Methylethylketon, Methylpyrrolidon oder deren Gemische sondern auch "reaktive Verdünner" in Betracht, wobei als "reaktive

Verdünner" bei Raumtemperatur flüssige Polyisocyanate der unter a) beispielhaft genannten Art bzw. bei Raumtemperatur flüssige Polyepoxide der unter b) beispielhaft genannten denkbar sind, wobei jedoch stets auf einen in derartigen Gemischen vorliegenden NCO-Überschuß gegenüber Epoxid- und Hydroxylgruppen entsprechend einem Äquivalentverhältnis von mindestens 1,2:1, vorzugsweise von mindestens 3:1 geachtet werden muß.

Die Aushärtung erfolgt durch Erhitzen der Gemische auf Temperaturen von mindestens 60 °C, vorzugsweise 60 bis 150 °C, wobei es zwecks Erreichens optimaler Eigenschaften oftmals angezeigt ist, die resultierenden Kunststoffe bei Temperaturen zwischen 150 und 250 °C, vorzugsweise zwischen 200 und 230 °C, nachzuhärten.

Das erfindungsgemäße Verfahren kann auch zur Herstellung von Tränk- und Imprägnierungsmassen für Elektroisolierungen oder für glasfaserverstärkte Laminate herangezogen werden. Das erfindungsgemäße Verfahren eignet sich zur Herstellung von elektrischen Bauteilen nach dem Gießverfahren. Hierzu gehören beispielsweise gedruckte Schaltungen, elektronische Uhren, Taschenrechner, elektronische Kameras, Computer, Mikrocomputer und digital arbeitende Datenspeicher. Die Herstellung derartiger Formkörper erfolgt stets unter entsprechend formgebender Verarbeitung der im "B-Zustand" befindlichen Harze, wobei die Formgebung vor oder während der Wärmebehandlung stattfinden kann. Die im "B-Zustand" befindlichen Harze können auch als Vergußmassen für die Elektroindustrie verwendet werden.

Die Wärmebeständigkeit der erfindungsgemäße Verfahrensprodukte, die niedrigen dielektrischen Verluste, die Feuchtebeständigkeit und die Abriebfestigkeit sowie die Verarbeitbarkeit in Formen sind hervorragend. Außerdem eignet sich das erfindungsgemäße Verfahren zur Herstellung von Isolierstoffen der Isolierstoffklassen H und C in elektrischen Motoren und Generatoren, zur Herstellung von Konstruktionswerkstoffen für Flugzeuge, Raketen oder anderen noch beanspruchten Geräten. Die im "B-Zustand" befindlichen Harze können, falls es sich um Festkörper handelt, als Pulverlackbindemittel oder als Klebstoff, insbesondere für Thermoplaste, eingesetzt werden. Auch die Herstellung von Isolatoren, Transformatoren, Kondensatoren, Schichtpreßstoffen zur Herstellung von Rohren, Behältern oder Sportgeräten unter entsprechend vorgegebener Verarbeitung der im "B-Zustand" befindlichen Harze ist möglich. Im Falle der Verarbeitung der im "B-Zustand" befindlichen Harze in Kombination mit geeigneten Treibmitteln ist auch die Herstellung von Schaumstoffen denkbar.

In den nachfolgenden Beispielen beziehen sich alle Prozentangaben auf Gewichtsprozente.

Beispiel 1

950 Gew.-Teile eines Gemischs aus 60 % 2,4'-Diisocyanatodiphenylmethan und 40 % 4,4'-Diisocyanatodiphenylmethan (NCO-Gehalt = 33,6 %) werden bei 50 °C mit 50 Gew.-Teilen des Diglycidylethers von Bisphenol A (Epoxidzahl = 0,585) und 0,5 ml (3,2 mmol) Dimethylbenzylamin gemischt und anschließend auf 120 °C aufgeheizt. Die leicht exotherme Reaktion zeigt den sofortigen Beginn der Isocyanurat- und Oxazolidinonbildung an. Nach 15 Min. Reaktionszeit ohne externe Heizung wird der Ansatz mit Eiswasser gekühlt. Dadurch stellt sich eine Innentemperatur von ca. 90 °C ein. Dem Ansatz wird eine Probe entnommen. Die probe ist bei Raumtemperatur ein festes, klebriges Harz und besitzt einen NCO-Gehalt von 18,4 % NCO. Durch Zugabe von 6,5 ml Stopperlösung I (= 15,4 gew.-%ige Lösung von p-Toluolsulfonsäuremethylester in einem Gemisch aus 60 % 2,4'-Diisocyanatodiphenylmethan und 40 % 4,4'-Diisocyanatodiphenylmethan) wird die Reaktion abgebrochen. Anschließend setzt man dem Ansatz weitere 596 Gew.-Teile der obengenannten Diisocyanatkomponente und 31 Gew.-Teile des obengenannten Diglycidylethers zu und rührt das Ganze bei 120 °C bis eine klare homogene Lösung entstanden ist. Es entsteht ein bei Raumtemperatur flüssiges, klares, gelbes, lagerstabiles Harz mit einer Viskosität bei 25 °C von 9300 mPa.s und einem NCO-Gehalt von 23,6 %.

Beispiel 2

40 Gew.-Teile des in Beispiel 1 beschriebenen Diglycidylethers und 760 Gew.-Teile des ebenfalls in Beispiel 1 beschriebenen Polyisocyanatgemischs werden bei 60 °C mit 0,4 ml Dimethylbenzylamin gemischt. Die Mischung wird anschließend auf 110 °C aufgeheizt. Die externe Heizquelle wird entfernt. Durch die einsetzende - leicht exotherme - Oxazolidinon- und Isocyanuratbildung heizt sich der Ansatz von selbst innerhalb von weiteren 5 bis 10 Minuten auf 114 bis 115 °C auf. Durch externe Kühlung wird die Innentemperatur auf 80 °C abgesenkt. Bei dieser Temperatur werden dem Ansatz 343 g Methylethylketon zugegeben. Es entsteht eine klare Lösung; die Innentemperatur stellt sich durch die Lösemittelzugabe auf 40 °C ein. Nach dieser Zugabe wird der NCO-Gehalt der Mischung ermittelt' er beträgt 17,2 % NCO. Man rührt den Ansatz weitere 75 Min. bei 40 °C und bestimmt danach den NCO-Gehalt; er beträgt 17,1 % NCO.

Anschließend wird auf 70 °C aufgeheizt und bei dieser Temperatur die Reaktion weitergeführt. Nach 60 Min. beträgt der NCO-Gehalt der Mischung 15,2 % NCO. Nach weiteren 90 Min. Rührzeit bei 70 °C beträgt der NCO-Gehalt der Mischung 13,8 % NCO und nach weiteren 180 Min. Rührzeit bei 70 °C wird ein NCO-Gehalt von 11,8 % ermittelt. In die Reaktionsmischung wird sodann 5,2 ml Stopperlösung I zugegeben. Man erhält eine 70 %ige, klare, gelbe, lagerstabile Lösung eines Isocyanurat- und Oxazolidinongruppen aufweisenden Prepolymers mit einer Viskosität von 310 mPa.s (23 °C).

Beispiel 3

1900 Gew.-Teile des in Beispiel 1 beschriebenen Diisocyanatgemischs und 100 Gew.-Teile des in Beispiel 1 beschriebenen Diglycidylethers werden bei 50 °C mit 1 ml Dimethylbenzylamin gemischt und auf 120 °C aufgeheizt. Die sofort einsetzende Isocyanurat- und Oxazolidinonbildung wird durch die schwach exotherme Reaktion angezeigt. Nach 15 Min. Reaktionszeit beträgt die Innentemperatur 126 °C. Durch Zugabe von 1 ml Stopperlösung I wird die Reaktion geregelt und die Reaktionstemperatur unter 130 °C gehalten. Dieser Vorgang wird innerhalb von 3 Min. dreimal wiederholt, so daß das Reaktionsgemisch an dieser Stelle der Reaktion bereits 4 ml Stopperlösung I enthält. Die Reaktionstemperatur fällt dabei auf 125 °C ab. Nach 20 Min. Reaktionszeit wird eine Probe entnommen und der NCO-Gehalt der Mischung bestimmt; er beträgt 20.1 % NCO. Nach weiteren 15 Min. Reaktionszeit bei 125 bis 126 °C Innentemperatur beträgt der NCO-Gehalt der Mischung 19,1 % NCO, und nach weiteren 30 Min. Reaktionszeit bei 125 bis 127 °C zeigt eine dem Ansatz entnommene Probe an, daß ein bei Raumtemperatur festes, klebfreies, gut pulverisierbares, lösliches Harz entstanden ist. Nun gibt man dem Ansatz weitere 9 ml Stopperlösung I zu, rührt das Ganze noch 10 Min. bei 125 bis 126 °C nach und gießt den Ansatz anschließend auf eine Teflonplatte. Es entsteht ein bei Raumtemperatur klares, klebfreies Harz mit einem NCO-Gehalt von 16,4 % NCO.

Beispiel 4

20 Gew.-Teile des in Beispiel 1 beschriebenen Diglycidethers und 380 Gew.-Teiles eines Polyisocyanatgemischs der Diphenylmethanreihe, wie es durch Phosgenierung eines Anilin/Formaldehyd-Kondensats erhalten worden ist, und welches bei 20 °C eine Viskosität von 467 mPa.s und einem NCO-Gehalt von 30,3 % aufweist, werden bei 50 °C mit 0,4 ml Dimethylbenzylamin gemischt und auf 120 °C aufgeheizt. Der Ansatz wird 60 Min. bei dieser Temperatur gerührt; anschließend beträgt der NCO-Gehalt der Mischung 20,5 % NCO. Durch Zugabe von 5,2 ml Stopperlösung I wird die Reaktions abgestoppt. Unter Rühren setzt man dem Ansatz eine Mischung aus 20 Gew.-Teilen Diglycidether aus Beispiel 1 und 380 Gew.-Teile des oben beschriebenen Polyisocyanatgemischs zu. Auf diese Weise entsteht ein bei Raumtemperatur hochviskoses Reaktionsharz mit folgenden Kenndaten:
NCO-Gehalt: 25 % NCO
Viskosität: $\eta_{35°C}$ = 81 000 mPa.s

Beispiel 5

950 Gew.-Teile des in Beispiel 1 beschriebenen Diisocyanatgemischs und 50 Gew.-Teile des ebenfalls in Beispiel 1 beschriebenen Diglycidethers und 50 Gew.-Teile eines Bis-(dimethyl-hydroxymethyl-silyl)-ethers werden mit 0,5 ml Dimethylbenzylamin gemischt und auf 70 °C aufgeheizt. Es entsteht nach anfänglicher Trübung eine klare Lösung. Nach 10 Min. Reaktionszeit ist die Innentemperatur auf 95 °C angestiegen. Danach wird dem Ansatz 6,5 ml Stopperlösung I zugesetzt. Man erhält auf diese Art und Weise ein bei Raumtemperatur flüssiges Harz mit folgenden Kenndaten:
NCO Gehalt: 22 % NCO
Viskosität: $\eta_{25°C}$ = 6920 mPa.s

Beispiel 6

100 Gew.-Teile des lagerstabilen Harzes gemäß Beispiel 1 werden jeweils in 4 Parallelversuchen mit 1 Gew.-Teil der in der nachstehenden Tabelle angegebenen latenten Katalysatoren versetzt und die Gelierzeiten (Vernetzungszeiten) bei 160 °C ermittelt. Die Standzeit der die latenten Katalysatoren enthaltenden Gemische bei Raumtemperatur lag jeweils oberhalb 7 Tagen (kein nennenswerter Viskositätsanstieg).

| Latenter Katalysator | Gelierzeit bei 160° C [Min] |
|---|---|
| 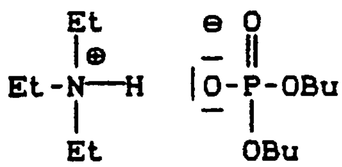 | >60 |
| 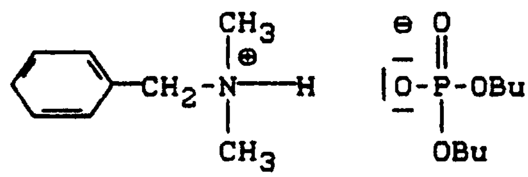 | 10 |
| 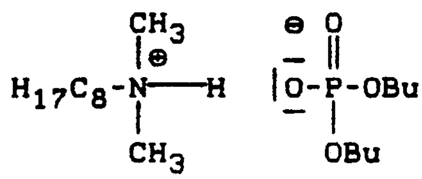 | 4 |
| 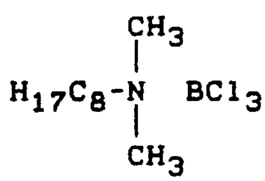 | 4 |

Beispiel 7

475 Gew.-Teile des in Beispiel 1 beschriebenen Diisocyanatgemischs und 25 Gew.-Teile des ebenfalls in Beispiel 1 beschriebenen Diglycidethers und 0,25 ml (1,6 mmol) Dimethylbenzylamin werden gemischt und auf 120° C erhitzt. Durch die leicht exotherme Reaktion steigt die Innentemperatur - ohne weitere Heizung -innerhalb von 30 Minuten auf 125° C an. Eine mit einem Glasstab entnommene Probe zeigt an, daß ein bei RT festes Harz entstanden ist. Zur Abstoppung der Reaktion gibt man der Mischung 0,70 g (3,25 mmol) 3-Nitro-benzolsulfonsäure-methylester(Stopper II) zu, läßt 15 Minuten bei 120 bis 130° C nachrühren und gießt das entstandene Harz auf eine Teflonplatte. Es entsteht bei RT klebfreies, gut pulverisierbares Harz mit einem NCO-Gehalt von 17,2 % NCO.

Beispiel 8

400 Gew.-Teile des in Beispiel 1 beschriebenen Diisocyanatgemischs und 100 Gew.-Teile des ebenfalls in Beispiel 1 beschriebenen Diglycidethers werden mit 0,25 ml (1,6 mmol) Dimethylbenzylamin gemischt und auf 120° C erhitzt. Durch die sofort einsetzende exotherme Reaktion steigt die Innentemperatur ohne externe Heizung auf 127° C an.

Durch Zugabe von 3,25 ml Stopperlösung III (= 14,4 gew.-%ige Lösung von Benzolsulfonsäuremethylester in einem Gemisch aus 60 % 2,4'-Diisocyanatodiphenylmethan und 40 % 4,4'-Diisocyanatodiphenylmethan) wird die Reaktion abgebrochen. Man erhält ein lagerstabiles, gut lösliches Harz mit folgenden Kenndaten:

Viskosität: $\eta$ = 17 620 mPa.s (25 °C)
NCO-Gehalt: 20.1 % NCO

Beispiel 9

100 Gew.-Teile des Harzes gemäß Beispiel 1 mit einer Viskosität von $\eta_{25^\circ C}$ = 9300 mPa.s und einem NCO-Gehalt von 23,6 % NCO werden mit 0,5 Gew.-Teilen Dimethyl-benzyl-ammonium-dibutylphosphat gemischt und bei 80 °C unter Rühren im Vakuum bei ca. 5 mbar entgast, bis die Flüssigkeit im Behälter blasenfrei vorliegt. Die dazu benötigte Zeit beträgt ca. 20 Minuten. Der Ansatz wird dann in eine auf 80 °C vorgewärmte Plattenform (150 x 130 x 4 mm) gegossen. Die Härtung erfolgt im Heizschrank nach folgendem Temperaturprogramm: 2 h 80 °C + 1 h 100 °C + 1 h 120 °C + 1 h 140 °C + 1 h 160 °C + 16 h 200 °C. Die Gelierung des Ansatzes in der Plattenform setzt bei 140 °C ein. Nach 1 h bei 140 °C erhält man ein angehärtetes Material, welches bei den angegebenen Temperaturen und Zeiten nachgehärtet wird. Nach Abkühlen erhält man eine völlig blasenfreie Probeplatte mit folgenden Kenndaten:

| | | | Meßmethode DIN |
|---|---|---|---|
| Schlagzähigkeit | [kJ/m²] | 8,84 | 53453 |
| Biegefestigkeit | [MPa] | 85,2 | 53452 |
| Randfaserdehnung | [%] | 2,44 | 53452 |
| Wärmeformbeständigkeit nach Martens | [°C] | 249 | 53462 |
| Kugeldruckhärte | [MPa] | 233,5 | 53456 |

Beispiel 10

100 Gew.-Teile des gemäß Beispiel 1 hergestellten Harzes ($\eta_{25^\circ C}$ = 9300 mPa.s, 23,6 % NCO) werden mit 100 Gew.-Teilen Quarzmehl gemischt und wie im Beispiel 9 beschrieben im Vakuum entgast. Nach 20 Minuten werden dem Ansatz 0,5 Gew.-Teile Dimethylbenzylammonium-dibutylphosphat zugegeben und nochmals 10 Minuten unter Rühren entgast. Auf diese Weise erhält man eine gut gießbare Masse- die wie im Beispiel 9 beschrieben gehärtet wird. Nach Abkühlen auf RT wird eine optisch einwandfreie Platte entformt, die folgende mechanische Werte aufweist:

| | | | Meßmethode DIN |
|---|---|---|---|
| Schlagzähigkeit | [kJ/m²] | 3,90 | |
| Biegefestigkeit | [MPa] | 94,2 | |
| Randfaserdehnung | [%] | 1,2 | |
| Wärmeformbeständigkeit nach Martens | [°C] | >250 | |
| Kugeldruckhärte | [MPa] | 372,8 | |
| Zugfestigkeit | [MPa] | 50,1 | 53455 |
| Dehnung | [%] | 0,4 | 53455 |
| E-Modul | [MPa] | 8665 | 53457 |

## Patentansprüche

1. Verfahren zur zweistufigen Herstellung von Formkörpern durch Umsetzung von
   a) mindestens einem organischen Polyisocyanat mit
   b) mindestens einer, mindestens zwei Epoxidgruppen aufweisenden organischen Verbindung in einer solchen Menge, die einem Äquivalentverhältnis von Isocyanatgruppen zu Epoxidgruppen von 1,2:1 bis 500:1 entspricht,

   dadurch gekennzeichnet, daß man das die Komponenten a) und b) enthaltende Gemisch in Gegenwart
   c) eines tertiären Amins als Katalysator zu einem Oxazolidinon- und Isocyanuratgruppen aufweisenden Zwischenprodukt umsetzt und die Reaktion bei einer Umsetzung von maximal 65 % der im Ausgangsgemisch vorliegenden Isocyanatgruppen durch Zugabe einer der Aminmenge mindestens äquivalenten Menge
   d) eines alkylierend wirkenden Sulfonsäurealkylesters von Methyljodid oder von Dimethylsulfat abbricht, das so erhaltene, noch flüssige oder schmelzbare Zwischenprodukt, gegebenenfalls nach Pulverisierung, Aufschmelzen oder Auflösen in einem geeigneten Lösungsmittel,
   e) mit mindestens einem latenten, durch Wärme aktivierbaren Katalysator versetzt und in einer zweiten Stufe unter Formgebung und weiterer Wärmeeinwirkung in den endgültigen, vernetzten Zustand überführt.

2. Verfahren gemäß Anspruch 1, dadurch gekennzeichnet, daß man dem Gemisch aus a) und b) und/oder dem noch flüssigen oder schmelzbaren Zwischenprodukt, gegebenenfalls nach Pulverisierung, Aufschmelzen oder Auflösen in einem geeigneten Lösungsmittel
   f) weitere an sich bekannte Hilfs- und Zusatzmittel einverleibt.

3. Verfahren gemäß Anspruch 1 und 2, dadurch gekennzeichnet, daß man als latente, durch Wärme aktivierbare Katalysatoren e) tertiäre oder quartäre Ammoniumsalze von alkylierend wirkenden oder sauren Estern von organischen Phosphonsäuren oder der Phosphorsäure und/oder Additionskomplexe von Bortrihalogeniden mit tertiären Aminen verwendet.

4. Verfahren gemäß Anspruch 1 bis 3, dadurch gekennzeichnet, daß man als Hilfs- und Zusatzmittel olefinisch ungesättigte Verbindungen, insbesondere Styrol und/oder Maleinimidderivate in Mengen von bis zu 100 Gew.-%, bezogen auf das Gesamtgewicht der Komponenten a) und b) und/oder mindestens zwei alkoholische Hydroxylgruppen aufweisende organische Verbindungen des Molekulargewichtsbereichs 62 bis 2000 in einer maximalen Menge, die einem NCO/OH-Äquivalentverhältnis, bezogen auf die Isocyanatgruppen der Komponente a) und die Hydroxylgruppen dieser Komponente f) von mindestens 2:1 entspricht, verwendet.

## Claims

1. A two-stage process for the production of mouldings by reaction of
   a) at least one organic polyisocyanate with
   b) at least one organic compound containing at least two epoxide groups in a quantity corresponding to an equivalent ratio of isocyanate groups to epoxide groups of 1.2:1 to 500:1,

   characterized in that the mixture containing components a) and b) is reacted in the presence of
   c) a tertiary amine as catalyst to form an intermediate product containing oxazolidinone and isocyanurate groups and the reaction is terminated at a conversion of at most 65% of the isocyanate groups present in the starting mixture by addition of
   d) an alkylating sulfonic acid alkyl ester of methyl iodide or of dimethyl sulfate in a quantity at least equivalent to the quantity of amine,
   e) at least one latent heat-activated catalyst is added to the still liquid or fusible intermediate product obtained, optionally after reduction to powder, fusion or dissolution in a suitable solvent, and in a second step the product is converted into its final cross-linked state in a mould by application of heat.

2. A process as claimed in claim 1, characterized in that
   f) other auxiliaries and additives known per se are incorporated in the mixture of a) and b) and/or the still liquid or fusible intermediate product, optionally after reduction to powder, fusion or dissolution in a suitable solvent.

3. A process as claimed in claims 1 and 2, characterized in that tertiary or quaternary ammonium salts of alkylating or acidic esters of organic phosphonic acids or phosphoric acid and/or addition complexes of boron trihalides with tertiary amines are used as the latent heat-activated catalysts e).

4. A process as claimed in claims 1 to 3, characterized in that olefinically unsaturated compounds, more particularly styrene and/or maleic imide derivatives, in quantities of up to 100% by weight, based on the total weight of components a) and b), and/or organic compounds containing at least two alcoholic hydroxyl groups and having a molecular weight in the range from 62 to 2,000 in a maximum quantity corresponding to an NCO:OH equivalent ratio, based on the isocyanate groups of component a) and the hydroxyl groups of component f), of at least 2:1 are used as the auxiliaries and additives.

**Revendications**

1. Procédé en deux étapes pour la fabrication de produits moulés, dans lequel on fait réagir
   a) au moins un polyisocyanate organique avec
   b) au moins un composé organique présentant au moins deux groupes époxyde en une quantité qui correspond à un rapport d'équivalence de groupes isocyanate aux groupes époxyde de 1,2:1 à 500:1,

   **caractérisé en ce qu'**on fait réagir le mélange contenant les composants a) et b) en présence
   c) d'une amine tertiaire comme catalyseur pour obtenir un produit intermédiaire présentant des groupes oxazolidinone et isocyanurate et en ce qu'on arrête la réaction après une transformation maximale de 65% des groupes isocyanate présents dans le mélange de départ, par addition d'une quantité au moins équivalente à la quantité d'amine
   d) d'un ester alkylique d'acide sulfonique à action alkylante, d'iodure de méthyle ou de sulfate de diméthyle ; au produit intermédiaire encore liquide ou fusible ainsi obtenu, éventuellement après pulvérisation, fusion ou dissolution dans un solvant approprié,
   e) on ajoute au moins un catalyseur latent activable à la chaleur et on le fait passer, lors d'une seconde étape, par façonnage et par action thermique supplémentaire, dans l'état final réticulé.

2. Procédé selon la revendication 1, **caractérisé en ce qu'**on incorpore au mélange constitué par a) et b) et/ou au produit intermédiaire encore liquide ou fusible, éventuellement après pulvérisation, fusion ou dissolution dans un solvant approprié
   f) d'autres additifs et agents auxiliaires connus en soi.

3. Procédé selon les revendications 1 et 2, **caractérisé en ce qu'**on utilise, comme catalyseurs latents e) thermiquement activables, des sels d'ammonium tertiaires ou quaternaires d'esters acides ou à action alkylante d'acides phosphoniques organiques ou de 1'acide phosphorique et/ou des complexes d'addition de trihalogénures de bore avec des amines tertiaires.

4. Procédé selon les revendications 1 à 3, **caractérisé en ce qu'**on utilise, comme agents auxiliaires et additifs, des composés à insaturation oléfinique, en particulier le styrène et/ou des dérivés de maléimide, dans des quantités allant jusqu'à 100% en poids, rapporté sur le poids total des constituants a) et b) et/ou des composés organiques présentant au moins deux groupes hydroxyle alcooliques dont le poids moléculaire se situe dans le domaine allant de 62 à 2000, en une quantité maximale qui correspond a un rapport d'équivalence NCO/OH, calculé sur les groupes isocyanate du composant a) et sur les groupes hydroxyle de ce composant f), d'au moins 2:1.